# FASCICULE DE BREVET EUROPEEN

(11) **EP 0 374 057 B1**
(45) Date de publication et mention de la délivrance du brevet: **19.01.1994**
(21) Numéro de dépôt: 89420456.9
(22) Date de dépôt: 21.11.1989
(51) Int. Cl.: D21C 9/10, D21C 5/02

(54) **Procédé de blanchiment de pâtes désencrées**
Verfahren zum Bleichen von tintenfreiem Zellstoff
Process for bleaching deinked pulp

(30) Priorité: 24.11.1988 FR 8815637
(43) Date de publication de la demande: 20.06.1990
(73) Titulaire: ELF ATOCHEM S.A., 92800 Puteaux (FR)
(72) Inventeur: Bourson, Lucien, F-92270 Bois-Colombes (FR); Devic, Michel, F-69110 Sainte-Foy-Les-Lyon (FR)

(56) Documents cités:
- EP-A- 0 263 040
- BE-A- 656 601
- DE-A- 1 546 250
- DE-A- 2 105 324
- FR-A- 1 461 003

## Description

La présente invention concerne un procédé de blanchiment de pâtes désencrées.

On connaît l'intérêt que porte l'industrie papetière et connexe à l'utilisation de pâtes blanchies dérivant de papiers récupérés et désencrés, par exemple pour l'élaboration de papier d'imprimerie, de papier toilette ou de carton.

On peut se reporter à ce sujet, par exemple à l'ouvrage de R.P. SINGH "The bleaching of pulp", 3ème édition, pp.324-326, 560-562.

Le blanchiment de pâtes désencrées fait appel à un agent réducteur, comme par exemple l'hydrosulfite de sodium ou dithionite de sodium, ou à un agent oxydant, comme par exemple le peroryde d'hydrogène.

C'est ce que rappelle la demande de brevet allemand DE-A-3118192.

Dans cette demande de brevet est décrite l'intervention, en phase initiale du désencrage, d'un agent de blanchiment réducteur qui peut être un mélange de sulfite et de dithionite, à raison de 0,1 % à 2 % en poids par rapport au poids de papier à l'état sec, à un pH compris entre 8,5 et 12.

L'application de dithionite à la pâte désencrée est par contre réalisée à pH égal à 6, valeur considérée comme celle devant être adoptée en dehors du désencrage.

EP-A-0 263 040 enseigne le blanchiment d'une pâte mécanique, d'abord au moyen d'un agent réducteur, p.ex. le borohydrure de sodium, un lavage, et ensuite au moyen d'un agent oxydant.

Il a été maintenant trouvé qu'une pâte désencrée pouvait être avantageusement blanchie à l'aide d'un mélange de sulfite et de borohydrure de sodium, qui, à l'image du dithionite de sodium est plus électronégatif que l'ion sulfite SO₃⁻⁻.

Par sulfite on entend ci-dessus et dans tout ce qui suit, sauf précision, le sulfite de sodium Na₂SO₃, ou le bisulfite de sodium NaHSO₃, ou du sulfite de sodium plus du bisulfite de sodium, ou encore, plus généralement, du dioxyde de soufre SO₂ plus de l'hydroxyde de sodium.

Il a aussi été trouvé qu'un blanchiment tel que défini ci-dessus pouvait être avantageusement associé à un blanchiment au moyen de peroxyde d'hydrogène en milieu aqueux alcalin.

L' objet de l'invention est un procédé de blanchiment de pâtes dérivant de papiers récupérés et désencrées, caractérisé en ce que la pâte désencrée est soumise à l'action conjointe de sulfite de sodium, ou bisulfite de sodium, ou sulfite de sodium et bisulfite de sodium, ou dioxide de soufre et hydroxyde de sodium, et de borohydrure de sodium, en milieu de pH initial compris entre 6,9 et 12, le pH initial de 6,9 compris, puis lavée pour éliminer le sulfite et le borohydrure de sodium, et enfin soumise à l'action du peroxyde d'hydrogène en milieu aqueux alcalin.

Il est ainsi permis d'atteindre des niveaux de blanc élevés.

On peut se reporter par exemple à la thèse soutenue le 6 décembre 1985 à l'Université Claude-Bernard-Lyon-1 par Odile CHALMIN LOUIS-ANDRE : "Propriétés réductrices du dithionite de sodium dans des conditions de transfert de phase" pour juger de l'électronégativité du dithionite.

La quantité de borohydrure de sodium mis en oeuvre peut varier. Cette quantité, comme toute quantité dans tout ce qui suit, est exprimée, sauf indication ou évidence, en pour cent en poids par rapport au poids de pâte désencrée à l'état sec. Le borohydrure de sodium est employé à raison d'environ 0,01 % à 0,5 % souvent à raison de 0,05 % à 0,25 %. Ce réducteur est commodément utilisé sous forme d'une solution aqueuse comme par exemple la solution renfermant 12 % en poids de borohydrure de sodium commercialisée sous le nom de BOROL® par la Société VENTRON Corporation.

La quantité de sulfite mise en oeuvre, exprimée en dioxyde de soufre SO₂ est comprise entre environ 0,1 % et 10 %, le plus souvent entre 1 % et 6 %.

La quantité de sulfite, soit donc celle de sulfite de sodium Na₂SO₃, ou de bisulfite de sodium NaHSO₃, ou de sulfite de sodium et de bisulfite de sodium, ou de dioxyde de soufre avec l'hydroxyde de sodium, respectivement, est de préférence supérieure à 2 %.

Dans le procédé de l'invention, le sulfite et le borohydrure de sodium ne sont en aucun moment présents l'un sans l'autre au contact de la pâte et la valeur du pH initial du milieu les renfermant avec la pâte est comprise entre les limites déjà indiquées. Par exemple si le procédé de l'invention débute par une imprégnation de la pâte, la solution aqueuse de la pâte contient ensemble le sulfite et le borohydrure de sodium que nécessite la réalisation dudit procédé.

L'intérêt du procédé selon l'invention est qu'il conduit à des résultats intéressants pour des valeurs de pH auxquelles s'exerce l'action conjointe du sulfite et du borohydrure de sodium comprises entre de larges limites pour ce qui concerne les valeurs de pH initial.

La température à laquelle le sulfite et l'agent réducteur agissent conjointement sur la pâte désencrée est comprise entre environ 40°C et 100°C, de préférence entre 65°C et 95°C.

La consistance, pourcentage en poids de pâte désencrée comptée à l'état sec dans le milieu, n'est pas un facteur critique pour la réalisation de l'invention. Pratiquement, elle peut être comprise entre environ 5 % et 50 %, le plus souvent entre environ 5 % et 25 %.

La durée de l'action conjointe du sulfite et du borohydrure de sodium selon l'invention dépend des autres paramètres d'exécution. Elle n'excède pas le plus souvent 2 heures.

Le lavage est réalisé de façon connue par exemple dans une séquence répétée ou non de dilution de la pâte par l'eau et de reconcentration de la pâte par pressage ou filtration.

On pourra se reporter par exemple à l'article de H. KRUGER, H.U. SUSS - Tappi, 1982 International Sulfite Pulping Conference, Toronto, 20-22 octobre 1982, 143-148 - pour juger de l'importance attribuée à ce lavage.

Le blanchiment au moyen de peroxyde d'hydrogène est par exemple réalisé en engageant une quantité de peroxyde d'hydrogène comprise entre environ 0,5 % et 10 %, de préférence entre 2 % et 6 %, en présence d'environ 1 % à 6 % d'une solution de silicate de sodium de densité 1,33, à pH compris entre environ 9 et 11, à une température comprise entre 40°C et 100°C durant environ 0,5 heure à 2 heures, avec une consistance comprise entre 10 % et 30 %. La solution de blanchiment peut contenir des additifs comme essentiellement un ou plusieurs agents complexants ou séquestrants comme par exemple les acides diéthylènetriaminepentaacétique et éthylènediaminetétraacétique sous forme de sels de sodium, en quantité généralement comprise entre environ 0,1 % et 1 %. La pâte à traiter par le peroxyde d'hydrogène peut encore être soumise avant action du peroxyde d'hydrogène à un traitement avec, en nature et en quantité, les agents complexants ou séquestrants tels que ci-dessus, à une température comprise entre 20°C et 100°C, de préférence entre 50°C et 100°C, de préférence entre 50°C et 95°C pour ne pas avoir à travailler sous pression en gardant une vitesse de complexation ou séquestration suffisamment rapide, à une consistance comprise entre environ 5 % et 30 % durant des périodes de temps pouvant varier entre environ 5 minutes et 2 heures, et suivie de préférence d'un lavage, par exemple par pressage.

Le traitement de la pâte désencrée à l'aide à la fois du sulfite et du borohydrure de sodium peut être lui-même précédé d'un traitement de ladite pâte à l'aide d'un agent complexant ou séquestrant, du type de celui décrit ci-dessus. La consistance peut alors être comprise entre environ 5 % et 50 %, généralement entre 25 % à 30 %. Un tel traitement contribue à accroître encore l'effet intrinsèque de l'invention sur le degré de blanc après blanchiment et sur l'efficacité d'action du peroxyde d'hydrogène.

Il est encore possible de mettre la pâte désencrée à blanchir en présence de l'agent complexant ou séquestrant au moment du traitement au moyen de sulfite du borohydrure de sodium.

Les exemples suivants, donnés à titre indicatif mais non limitatif illustrent l'invention.

Dans ces exemples :
- les quantités sont exprimées en pour cent en poids par rapport à la pâte désencrée à l'état sec, sauf précision ou évidence,
- par DTPA est désignée une solution aqueuse de 40% en poids de sel de sodium de l'acide diéthylènetriaminepentaacétique et la quantité indiquée est celle de cette présentation,
- le pH initial du milieu d'action conjointe du sulfite et du borohydrure de sodium et, le cas échéant, celui de la solution aqueuse d' imprégnation préalable de la pâte, qui contient le sulfite et le borohydrure de sodium, est compris entre 6,9 et 12, le pH initial de 6,9 compris.
- le borohydrure de sodium est appliqué sous forme de BOROL® et la quantité indiquée est celle de cette présentation,
- par silicate est désignée une solution aqueuse de silicate de sodium de densité égale à 1,33,
- le degré de blanc, exprimé en degré, est mesuré (457 nm) à l'aide du spectrophotomètre de type ELREPHO, fabriqué par CARL ZEISS.
- la pâte désencrée de départ a un degré de blanc égal à 61,5°.

### Exemples 1 à 5

La pâte désencrée est soumise à 90°C, durant 1 heure, à une consistance de 12 %, à l'action conjointe de BOROL® et de sulfite de sodium plus bisulfite de sodium.

Le tableau I ci-dessous rassemble les conditions des essais relatives aux quantités respectives de BOROL®, de sulfite de sodium, de bisulfite de sodium, au pH initial, et aux degrés de blanc des pâtes blanchies obtenues.

**Tableau I**

| Ex. N^{o} | Sulfite | | BOROL® | pH | Degré de blanc |
|---|---|---|---|---|---|
| | Na₂SO₃ | NaHSO₃ | | | |
| 1 | 2,1 | 4 | 1 | 7 | 69,5 |
| 2 | 6,5 | 0,35 | 1 | 10,5 | 67,5 |
| 3 | 3,2 | 3,2 | 1,8 | 8,2 | 71 |
| 4 | 3,2 | 3,2 | 2 | 8,4 | 71,6 |
| 5 | 3,2 | 3,2 | 0,45 | 6,9 | 67,5 |

### Exemples 6 et 7

Les pâtes désencrées blanchies obtenues dans les exemples 2 et 3 ont été traitées, une fois les ions sulfites et le borohydrure pratiquement éliminés par lavage, au moyen de 4 % de peroxyde d'hydrogène avec 0,8 % d'hydroxyde de sodium, 4 % de silicate de sodium et 0,5 % de DTPA, à 70°C durant 2 heures à une consistance de 12 %.

La pâte de l'essai 3 ainsi blanchie a un degré de blanc égal à 75,1° (exemple 6).

La pâte de l'essai 2 ainsi blanchie a un degré de blanc égal à 72,6° (exemple 7).

## Revendications

1. Procédé de blanchiment de pâtes dérivant de papiers récupérés et désencrées, caractérisé en ce que la pâte désencrée est soumise à l'action conjointe de sulfite de sodium, ou bisulfite de sodium, ou sulfite de sodium et bisulfite de sodium, ou dioxide de soufre et hydroxyde de sodium, et de borohydrure de sodium, en milieu de pH initial compris entre 6,9 et 12, le pH initial de 6,9 compris , puis lavée pour éliminer le sulfite et le borohydrure de sodium, et enfin soumise à l'action du peroxyde d'hydrogène en milieu aqueux alcalin.

2. Procédé suivant la revendication 1, caractérisé en ce que le borohydrure de sodium est engagé à raison de 0,01% à 0,5% en poids par rapport au poids de la pâte désencrée à l'état sec.

3. Procédé suivant la revendication 1 ou 2, caractérisé en ce que la quantité de sulfite est telle qu'elle soit comprise entre 0,1 % et 10 % exprimée en dioxyde de soufre, en poids par rapport au poids de la pâte désencrée à l'état sec.

4. Procédé suivant la revendication 3, caractérisé en ce que la quantité de sulfite, exprimée en dioxyde de soufre, est supérieure à 2 %.

5. Procédé suivant l'une des renvendications 1 à 4, caractérisé en ce que l'action conjointe du sulfite et du borohydrure de sodium s'exerce à une température comprise entre 40°C et 100°C.

6. Procédé suivant la revendication 5, caractérisé en ce que la température est comprise entre 65°C et 95°C.

7. Procédé suivant l'une des revendications 1 à 6, caractérisé en ce que le peroxyde d'hydrogène est engagé à raison de 2 % à 6 % en poids par rapport au poids de la pâte désencrée à l'état sec, en milieu de pH compris entre 9 et 11, à une température comprise entre 40°C et 100°C.

## Claims

1. Process for bleaching pulps deriving from recovered and deinked papers, characterized in that the deinked pulp is subjected to the joint action of sodium sulphite, or sodium bisulphite, or sodium sulphite and sodium bisulphite, or sulphur dioxide and sodium hydroxide, and sodium borohydride, in medium with an initial pH between 6.9 and 12, the initial pH of 6.9 included, then washed to remove the sodium sulphite and borohydride, and finally subjected to the action of hydrogen peroxide in aqueous alkaline medium.

2. Process according to Claim 1, characterized in that the sodium borohydride is charged at a concentration of 0.01 % to 0.5 % by weight with respect to the weight of the deinked pulp in the dry state.

3. Process according to Claim 1 or 2, characterized in that the amount of sulphite is such that it is between 0.1 % and 10 %, expressed as sulphur dioxide, by weight with respect to the weight of the deinked pulp in the dry state.

4. Process according to Claim 3, characterized in that the amount of sulphite, expressed as sulphur dioxide, is greater than 2 %.

5. Process according to one of Claims 1 to 4, characterized in that the joint action of the sodium sulphite and borohydride is carried out at a temperature between 40°C and 100°C.

6. Process according to Claim 5, characterized in that the temperature is between 65°C and 95°C.

7. Process according to one of Claims 1 to 6, characterized in that the hydrogen peroxide is charged at a concentration of 2 % to 6 % by weight with respect to the weight of the deinked pulp in the dry state, in medium with a pH between 9 and 11, at a temperature between 40°C and 100°C.

## Patentansprüche

1. Verfahren zum Bleichen von Zellstoffbrei aus wiederverwertetem und entfärbtem Papier, dadurch gekennzeichnet, daß der entfärbte Zellstoffbrei einer gemeinsamen Einwirkung von Natriumsulfit oder Natriumhydrogensulfit oder Natriumsulfit und Natriumhydrogensulfit oder Schwefeldioxid und Natriumhydroxid und Natriumborhydrid in einem Milieu mit einem Anfangs-pH-Wert zwischen 6,9 und 12, einschließlich des Anfangs-pH-Werts von 6,9, unterzogen und anschließend gewaschen wird, um das Sulfit und das Natriumborhydrid zu entfernen, und schließlich der Einwirkung eines Wasserstoffperoxids in einem wäßrig alkalischen Milieu ausgesetzt wird.

2. Verfahren nach Anspruch 1, dadurch gekennzeichnet, daß das Natriumborhydrid im einem Anteil von 0,01 bis 0,5 Gew.%, bezogen auf das Gewicht des entfärbten Zellstoffbreis im trockenen Zustand eingesetzt wird.

3. Verfahren nach Anspruch 1 oder 2, dadurch gekennzeichnet, daß die Sulfitmenge so ist, daß sie, ausgedrückt als Schwefeldioxid, zwischen 0,1 und 10 Gew.%, bezogen auf das Gewicht des entfärbten Zellstoffbreis im trockenen Zustand, beträgt.

4. Verfahren nach Anspruch 3, dadurch gekennzeichnet, daß die Sulfitmenge, bezogen auf das Schwefeldioxid, größer als 2 % ist.

5. Verfahren nach einem der Ansprüche 1 bis 4, dadurch gekennzeichnet, daß das gemeinsame Einwirken des Sulfits und des Natriumborhydrids bei einer Temperatur zwischen 40 und 100°C durchgeführt wird.

6. Verfahren nach Anspruch 5, dadurch gekennzeichnet, daß die Temperatur zwischen 65 und 95°C beträgt.

7. Verfahren nach einem der Ansprüche 1 bis 6, dadurch gekennzeichnet, daß das Wasserstoffperoxid zu einem Anteil von 2 bis 6 Gew.%, bezogen auf das Gewicht des Zellstoffbreis im trockenen Zustand, in einem Milieu mit einem pH-Wert zwischen 9 und 11 und einer Temperatur zwischen 40 und 100°C eingesetzt wird.
